Europäisches Patentamt

European Patent Office

Office européen des brevets

(11) Veröffentlichungsnummer: **0 343 428**
**A1**

## (12) EUROPÄISCHE PATENTANMELDUNG

(21) Anmeldenummer: 89108362.8

(22) Anmeldetag: 10.05.89

(51) Int. Cl.⁴: **H02P 7/00**

(30) Priorität: 21.05.88 DE 3817401

(43) Veröffentlichungstag der Anmeldung:
29.11.89 Patentblatt 89/48

(84) Benannte Vertragsstaaten:
**DE FR GB IT**

(71) Anmelder: **ROBERT BOSCH GMBH**
**Postfach 10 60 50**
**D-7000 Stuttgart 10(DE)**

(72) Erfinder: **Conzelmann, Gerhard**
**Wilhelmstrasse 37**
**D-7022 Leinfelden-Oberaichen(DE)**

(54) **Halbleiterbrückenschaltung.**

(57) Es wird eine monolitisch integrierte Halbleiterbrückenschaltung vorgeschlagen, die aus zwei Zweigen besteht und bei der in einer ersten Brückendiagonalen eine Betriebsgleichspannungsquelle (12) und in einer zweiten Brückendiagonalen ein Verbraucher (7) liegt, wobei in die beiden Zweige je zwei zueinander in Reihe liegende Halbleiterschalter (3, 4; 5, 6) geschaltet sind. Die Halbleiterschalter sind derart gegenphasig ansteuerbar, daß die Endpunkte (71, 72) der zweiten Brückendiagonalen jeweils an die erste Klemme (1) oder an die zweite Klemme (2) der Betriebsgleichspannungsquelle (12) geschaltet werden können und so die Stromrichtung im Verbraucher (7) umgepolt werden kann. Die an der zweiten Klemme (2) der Betriebsgleichspannungsquelle (12) liegenden Halbleiterschalter bestehen aus npn-Transistoren (4, 6) und die an der ersten Klemme (1) liegenden Halbleiterschalter aus Thyristoren (3, 5).

FIG. 1

EP 0 343 428 A1

## Halbleiterbrückenschaltung

Stand der Technik

Die Erfindung betrifft eine monolithisch integrierte Halbleiterbrückenschaltung nach der Gattung des Hauptanspruchs.

Es ist bereits eine Halbleiterbrückenschaltung dieser Art bekannt, bei der die an der ersten Klemme der Betriebsgleichspannungsquelle liegenden Halbleiterschalter aus stromstarken pnp-Transistoren bestehen. Derartige pnp-Transistoren lassen sich aber in monolithisch integrierter Technik nur als Lin-Schaltungen, d. h. durch die Kombination eines lateralen pnp-Transistors mit einem vertikalen npn-Leistungstransistor darstellen, der üblicherweise als Darlington-Transistor ausgebildet wird. Stehen nur niedrige Betriebsspannungen zur Verfügung, so sind Einfachtransistoren wegen ihrer niedrigen Sättigungsspannung den üblichen Darlington-Transistoren vorzuziehen. In diesem Falle werden pnp-Transistoren für immer noch beachtliche Ströme benötigt, beispielsweise für einen Arbeitsstrom in der Brücke von 10 A ein Kollektorstrom des pnp-Transistors von ca. 0,5 A, was bei einem lateralen Transistor bereits eine beachtliche Fläche erfordert.

Vorteile der Erfindung

Die erfindungsgemäße monolithisch integrierte Halbleiterbrückenschaltung mit den kennzeichnenden Merkmalen des Hauptanspruchs hat demgegenüber den Vorteil, daß sich die anstelle der stromstarken pnp-Transistoren für die an der ersten Klemme der Betriebsspannungsquelle liegenden Halbleiterschalter eingesetzten, sehr leistungsfähigen Thyristoren mit geringem Flächenaufwand leicht monolithisch integrieren lassen. Ein Anodenstrom von 50 A bei einer Anodenspannung von unter 1,2 V ist hierbei wirtschaftlich realisierbar. Weitere Vorteile ergeben sich aus den Unteransprüchen 2 bis 15 und aus der Beschreibung von in der Zeichnung dargestellten Ausführungsbeispielen.

Zeichnung

Anhand der Zeichnung wird die Erfindung näher erläutert. Es zeigen:
Die Figuren 1 bis 4 je ein Ausführungsbeispiel einer erfindungsgemäßen Halbleiterbrückenschaltung,
Figur 5 ein möglicher zeitlicher Verlauf einer Betriebsgleichspannung,

Figur 6a eine mögliche Anordnung der Komponenten der erfindungsgemäßen Halbleiterbrückenschaltung auf dem Substrat,
Figur 6b einen Schnitt durch die Anordnung nach Figur 6a.

Beschreibung der Erfindung

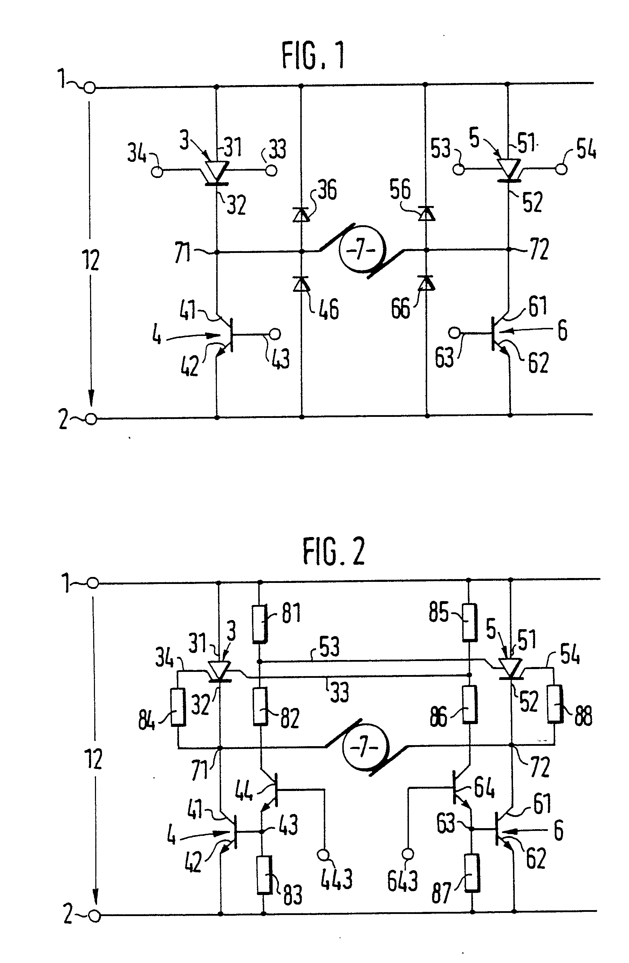

In Figur 1 ist mit 1 der Pluspol, mit 2 der Minuspol einer Spannungsquelle 12 bezeichnet. Die Schaltungselemente 3 und 5 sind die beiden jeweils mit ihrer Anode am Pluspol liegenden Thyristoren, die Schaltungselemente 4 und 6 die jeweils mit ihrem Emitter am Minuspol liegenden npn-Transistoren. Die jeweiligen Verbindungspunkte von Kathode und Kollektor der genannten Schaltungselemente 3 und 4 bzw. 5 und 6 sind mit 71 bzw. 72 bezeichnet. Zwischen den Verbindungspunkten 71 und 72 liegt die Brückendiagonale mit dem Verbraucher 7. Ferner ist mit 31, 51 die Anode, mit 32, 52 die Kathode der Thyristoren 3 bzw. 5 bezeichnet, 33, 53 und 34, 54 sind die beiden möglichen Gates; entsprechend sind 41, 61 die Kollektoren, 42, 62 die Emitter und 43, 63 die Basisanschlüsse der Transistoren. Desgleichen sind mögliche, ebenfalls integrierbare Freilaufdioden mit 36, 46, 56 und 66 bezeichnet. Diese sind der Einfachheit halber in den Figuren 2 bis 4 nicht mehr aufgeführt.

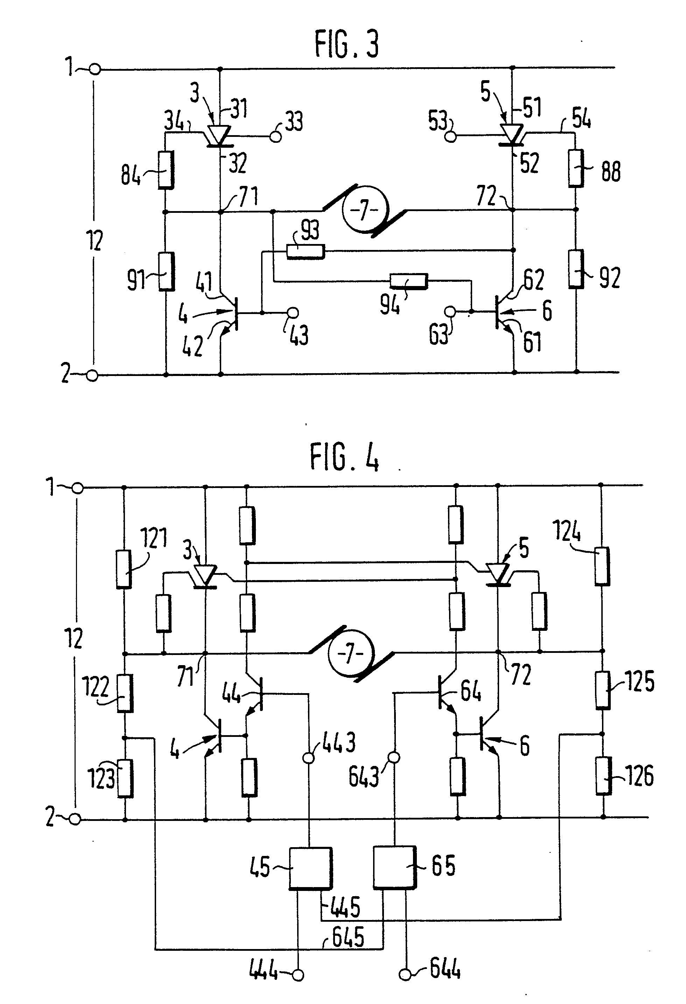

Je nach Beschaltung läßt sich nun der im Strompfad liegende Thyristor 3 oder 5 mit dem ebenfalls im Strompfad liegenden Transistor 6 oder 4 zünden (Figur 2) oder aber entsprechend der zugehörige Transistor durch seinen gezündeteten Thyristor einschalten (Figur 3). Wird, wie im ersten Falle, der Thyristor durch den Transistor gezündet, so läßt sich die Brücke über den Kollektorstrom des Transistors im Haltestrombereich des Thyristors auch linear steuern. Im Falle der Figur 3 ist eine lineare Steuerung zwar ebenfalls durch Abziehen von Strom aus den Basen 43 oder 63 nach Masse möglich, jedoch meist nicht zweckmäßig.

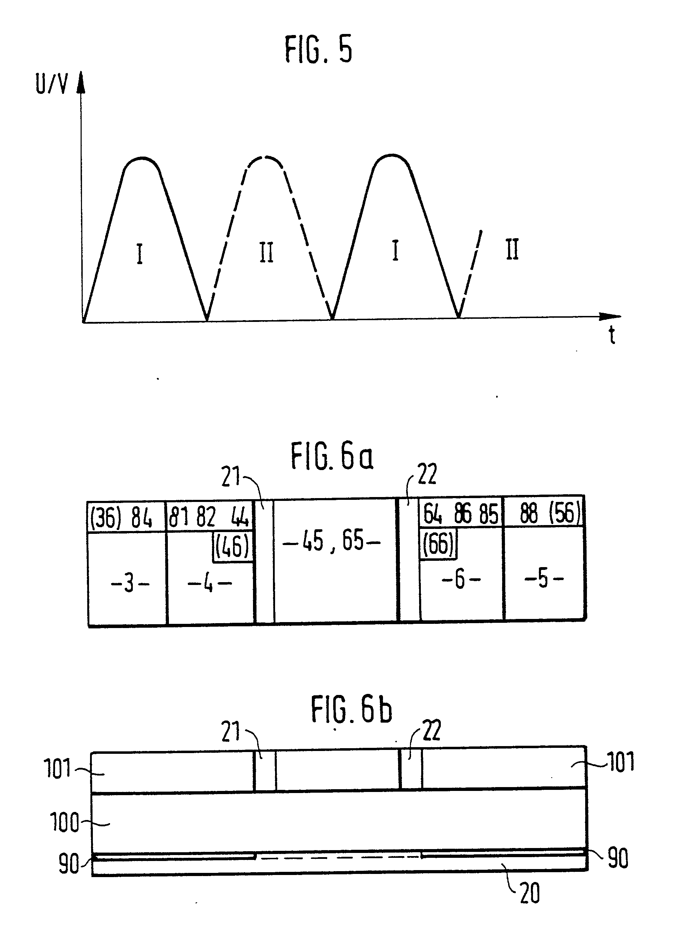

Die Thyristoren liegen in Gleichstromkreisen. Sie müssen sich sicher löschen lassen. Dies ist durch die Kombination mit Transistoren möglich. Wird deren Kollektorstrom von der Basis her unter den Haltestrom abgesenkt, so erlöschen die Thyristoren. Dies gilt für die beiden Anordnungen nach den Figuren 2 und 3. Selbstlöschend ist die Schaltung nach Figur 3 dann, wenn sie an einer Wellenspannung, beispielsweise an einer gleichgerichteten Wechselspannung nach Figur 5, betrieben wird. Diese Figur stellt den Zeitverlauf der Betriebsgleichspannung dar: I bei Halbwellengleichrichtung, I und II bei Vollwellengleichrichtung. Hier genügt es, den Thyristor entweder direkt über ein Gate oder über einen der Transistoren 4, 6 zu zünden.

In der Schaltung nach Figur 2 dienen die Widerstände 84 und 88, die jeweils von dem Gate 34 bzw. 54 zur Kathode 32 bzw. 52 der Thyristoren 3 bzw. 5 führen, zur Einstellung des Haltestroms der Thyristoren. Mit 44 und 64 sind die Ansteuertransistoren der Leistungstransistoren 4 bzw. 6 bezeichnet. Ihre Emitter liegen an den Basen 43 bzw. 63 der Leistungstransistoren 4 bzw. 6, die ihrerseits wieder über die Widerstände 83 bzw. 87 an die Minusleitung 2 angeschlossen sind. Die Kollektoren der Ansteuertransistoren 44 und 64 sind über die Reihenschaltung der Widerstände 82, 81 bzw. 86, 85 an die Plusleitung 1 angeschlossen. Am Verbindungspunkt zwischen den Widerständen 81 und 82 liegt das Gate 53, am Verbindungspunkt zwischen den Widerständen 85 und 86 das Gate 33.

Wird nun der Transistor 44 durch ein positives Potential an seiner Basis 443 eingeschaltet, so zieht auch der Transistor 4 Strom und der Thyristor 5 wird über sein Gate 53 gezündet: es fließt Strom vom Pluspol 1 durch den Thyristor 5, den Verbraucher 7 und den Transistor 4 zum Minuspol 2. Wird das positive Potential an der Klemme 443 abgeschaltet, so wird der Transistor 4 und damit auch der Thyristor 5 wieder stromlos. Wird an die Basis 643 des Transistors 64 ein positives Potential gelegt, so werden der Transistor 6 und der Thyristor 3 stromführend: der Strom fließt in entgegengesetzter Richtung durch den Verbraucher 7.

Figur 3 zeigt ein Beispiel für das Einschalten der Halbbrücke über das Gate 33 bzw. 53. Die Thyristoren 5, 3 liefern jetzt über den Widerstand 93 den Basisstrom für den Transistor 4 bzw. über den Widerstand 94 den Basisstrom für den Transistor 6. Diese Schaltung ist besonders vorteilhaft, wenn sie an einer Wellenspannung betrieben wird.

Wichtig ist es, dafür zu sorgen, daß nicht beide Strompfade 3, 6 und 5, 4 miteinander gezündet werden. Dies läßt sich durch logisches Verknüpfen der Steuersignale erreichen.

Ein mögliches Beispiel hierzu zeigt Figur 4. Die Basen 443 bzw. 643 sind jetzt über die UND-Schaltungen 45 bzw. 65 an die Steuereingänge 444 bzw. 644 angeschlossen. Der zweite Eingang 445 bzw. 645 der UND-Schaltung 45 bzw. 65 wird jeweils vom Schaltzustand des anderen Zweiges bedient. Hierzu sind die Spannungsteiler 121, 122, 123 und 124, 125, 126 zwischen den Pluspol 1, die Endpunkte 71 bzw. 72 der zweiten Brückendiagonalen und den Minuspol 2 geschaltet.

Liegt der Eingang 445, wie dargestellt, am Verbindungspunkt der beiden Widerstände 125, 126 bzw. der Eingang 645 am Verbindungspunkt der beiden Widerstände 122, 123, so sind beide Eingänge der UND-Schaltung positiv, wenn keiner der Zweige Strom führt. Jeder der beiden Strompfade kann durch Anlegen eines positiven Potentials an den Eingängen 444 bzw. 644 eingeschaltet werden. Zieht dagegen der Strompfad 3, 6 Strom, so läßt sich der Strompfad 4, 5 über die UND-Schaltung 45 nicht mehr einschalten, da der Eingang 445 der UND-Schaltung 45 jetzt auf "0" liegt und umgekehrt. Alle übrigen Teile der Figur 4 entsprechen denen der Figur 2. Der Fachmann kann leicht eine Vielzahl möglicher Verknüpfungen und die dazugehörenden Potentialpunkte erstellen. Auch kann es erforderlich sein, dynamische Abläufe zu berücksichtigen und entsprechende Verzögerungsglieder einzubauen.

Die Thyristoren liegen mit ihren Anoden an Plus, das Substrat der monolithisch integrierten Schaltung jedoch an Minus. Es fließen deshalb, wenn die Schaltung in einer der gebräuchlichen Technologien zur Herstellung monolithisch integrierter Schaltkreise hergestellt ist, beachtliche parasitäre Substratströme.

Es wird deshalb vorgeschlagen, das Substratpotential floaten zu lassen und so die parasitären Verluste zu minimieren.

Eine mögliche Anordnung der Komponenten auf dem Substrat ist in der Figur 6a schematisch dargestellt; Figur 6b zeigt einen Schnitt durch das Substrat. Die Benennung der Komponenten entspricht der der Figuren 1 bis 4. Mit 100 ist das Substrat, mit 101 die Epitaxialschicht, in der die die Komponenten bildenden unterschiedlich dotierten Zonen der monolithisch integrierten Schaltung untergebracht sind, bezeichnet. Mindestens im Bereich der Halbleiterschalter 3 und 4 bzw. 5 und 6 ist das Substrat 100 von der Rückseitenmetallisierung 20 durch eine elektrisch hinreichend isolierende Zwischenschicht 90 getrennt, so daß von den Thyristoren 3, 5 erzeugte parasitäre Substratströme nicht direkt über die Rückseitenmetallisierung 20 nach Masse abfließen können, sondern über das hochohmige , sie begrenzende Substrat 100 zu den mittels Isolierungsdiffusionszonen gebildeten Barrieren 21 und 22 fließen, die mittels des Metallisierungsnetzwerks der integrierten Schaltung an Masse angeschlossen sind. Durch die Massebarrieren 21 und 22 wird das Substratpotential im Mittelteil auf Massepotential festgehalten, so daß der Mittelteil Schaltungsteile aufzunehmen vermag, die zu einer einwandfreien Funktion ein auf Masse liegendes Substratpotential benötigen.

Sind Freilaufdioden erforderlich, so kann die Freilaufdiode 36 neben dem Thyristor 3, die Freilaufdiode 56 neben dem Thyristor 5, die Freilaufdiode 46 neben dem Transistor 4 und die Freilaufdiode 66 neben dem Transistor 6 angeordnet werden. Diese Dioden lassen sich auch zum Schutz der Schaltung als Z-Dioden ausführen.

In den Figuren 6 a und 6 b ist die Anordnung eines Chips mit einer Vollbrückenschaltung wiedergegeben. Es kann auch vorteilhaft sein, nur eine Halbbrücke auf einem Chip zu integrieren.

Die vorgeschlagene monolithisch integrierte Halbleiterbrückenschaltung ist nicht nur zum Aus- und Einschalten eines Stroms und zum Umpolen der Stromrichtung, sondern auch besonders vorteilhaft für getaktete Spannungs- bzw. Stromregler geeignet.

**Ansprüche**

1. Monolithisch integrierte Halbleiterbrückenschaltung, bestehend aus zwei Zweigen, bei der in einer ersten Brückendiagonalen mit einem ersten Endpunkt (1) und einem zweiten Endpunkt (2) eine Betriebsgleichspannungsquelle (12) und in einer zweiten Brückendiagonalen mit einem ersten Endpunkt (71) und einem zweiten Endpunkt (72) ein Verbraucher (7) liegt und bei der in die beiden Zweige je zwei zueinander in Reihe liegende Halbleiterschalter (3, 4; 5, 6) geschaltet sind, die derart gegenphasig ansteuerbar sind, daß entweder der erste Endpunkt (71) der zweiten Brückendiagonalen an den ersten Endpunkt (1) der ersten Brückendiagonalen und der zweite Endpunkt· (72) der zweiten Brückendiagonalen an den zweiten Endpunkt (2) der ersten Brückendiagonalen oder umgekehrt der erste Endpunkt (71) der zweiten Brückendiagonalen an den zweiten Endpunkt (2) der ersten Brückendiagonalen und der zweite Endpunkt (72) der zweiten Brückendiagonalen an den ersten Endpunkt (1) der ersten Brückendiagonalen geschaltet werden können und so die Stromrichtung im Verbraucher (7) umgepolt werden kann, wobei die am zweiten Endpunkt (2) der ersten Brückendiagonalen liegenden Halbleiterschalter aus Transistoren (4, 6) bestehen, dadurch gekennzeichnet, daß die am ersten Endpunkt (1) der ersten Brückendiagonalen liegenden Halbleiterschalter aus Thyristoren (3, 5) bestehen.

2. Halbleiterbrückenschaltung nach Anspruch 1, dadurch gekennzeichnet, daß an den ersten Endpunkt (1) der ersten Brückendiagonalen der Pluspol der Betriebsgleichspannungsquelle (12) und an den zweiten Endpunkt (2) der ersten Brückendiagonalen deren Minuspol angeschlossen ist und daß die Transistoren (4, 6) npn-Transistoren sind.

3. Halbleiterbrückenschaltung nach Anspruch 1 oder 2, dadurch gekennzeichnet, daß durch Einschalten eines Transistors (4 oder 6) der dazugehörende, im anderen Zweig liegende Thyristor (5 bzw. 3) gezündet wird (Figur 2).

4. Halbleiterbrückenschaltung nach Anspruch 1 oder 2, dadurch gekennzeichnet, daß durch Zünden eines Thyristors (3 oder 5) der dazugehörende, im anderen Zweig liegende Transistor (6 bzw. 4) mit eingeschaltet wird (Figur 3).

5. Halbleiterbrückenschaltung nach Anspruch 3 oder 4, dadurch gekennzeichnet, daß durch Ausschalten des stromführenden Transistors der Brückenstrom unterbrochen wird.

6. Halbleiterbrückenschaltung nach Anspruch 3 oder 4, dadurch gekenneichnet, daß bei einer Wellenspannung als Betriebsgleichspannung, die durch Einphasen-Halb- oder -Vollweggleichrichtung gebildet ist, der Stromfluß durch den Verbraucher (7) durch Unterschreiten des Haltestroms des stromführenden Thyristors (3 oder 5) unterbrochen wird.

7. Halbleiterbrückenschaltung nach einem der vorhergehenden Ansprüche, dadurch gekennzeichnet, daß Mittel vorgesehen sind, die verhindern, daß ein Transistor (4 oder 6) eingeschaltet wird, solange der jeweils andere Transistor (6 oder 4) Strom führt.

8. Halbleiterbrückenschaltung nach einem der vorhergehenden Ansprüche, dadurch gekennzeichnet, daß Mittel vorgesehen sind, die verhindern, daß ein Thyristor (3 oder 5) gezündet wird, solange der jeweils andere Thyristor (5 bzw. 3) Strom führt.

9. Halbleiterbrückenschaltung nach Anspruch 7 oder 8, gekennzeichnet durch logische Verknüpfungen als Mittel zum Verhindern ungewollten Einschaltens bzw. Zündens.

10. Halbleiterbrückenschaltung nach Anspruch 9, dadurch gekennzeichnet, daß mindestens zwei UND -Verknüpfungen (45, 65) als Mittel zum Verhindern ungewollten Einschaltens bzw. Zündens vorgesehen sind.

11. Halbleiterbrückenschaltung nach einem der Ansprüche 1 bis 10, gekennzeichnet durch eine zeitliche Verzögerung zwischen dem Ausschalten eines Strompfades (3, 6 bzw. 5, 4) und dem Einschalten des anderen Strompfades (5, 4 bzw. 3, 6).

12. Halbleiterbrückenschaltung nach Anspruch 1 oder 2, dadurch gekennzeichnet, daß von den beiden in den beiden Zweigen liegenden Halbleiterschaltern (3, 4, 5, 6) jeweils der Transistor (4; 6) durch ein an seine Basis (43 bzw. 63) anlegbares Steuersignal ein- und ausschaltbar ist und daß jeweils zwischen dem Transistor (4; 6) und einem Gate (53 oder 33) des im jeweiligen anderen Zweig liegenden Thyristors (5 bzw. 3) Schaltmittel (44, 81, 82, 83; 64, 85, 86, 87) vorgesehen sind, die beim Ein- bzw. Ausschalten des Transistors (4; 6) den Thyristor (5; 3) zünden bzw. löschen (Figur 2).

13. In Bipolartechnik ausgeführte monolithisch integrierte Halbleiterbrückenschaltung nach einem der vorhergehenden Ansprüche, dadurch gekennzeichnet, daß jeweils mindestens die Thyristoren (3, 5) in einem Bereich der monolithisch integrierten Schaltung liegen, der von einer Massepotential führenden Rückseitenmetallisierung (20) durch eine Zwischenschicht (90) hinreichend elektrisch isoliert und durch eine als Massebarriere wirkende Isolierungsdiffusionszone (21, 22) berandet ist, die über die Oberflächenmetallisierung der monolithisch integrierten Schaltung an Massepotential angeschlossen ist, so daß mindestens in diesem Bereich das Potential des Substrats (100) in Bezug auf das Massepotential der Rückseitenmetallisierung floatet.

14. Halbleiterbrückenschaltung nach Anspruch 13, dadurch gekennzeichnet, daß der Bereich aus zwei Teilbereichen besteht, die sich jeweils vom Rande gegen die Mitte des Substrats (100) hin erstrecken und durch je eine als Massebarriere wirkende Isolierungsdiffusionszone (21, 22) gegen einen zur Aufnahme empfindlicher Komponenten (45, 65, ...) dienenden Mittelteil des Substrats berandet sind und daß in jedem der Teilbereiche jeweils am Rande des Substrats (100) einer der beiden Thyristoren (3, 5) und unmittelbar daran anschließend und sich bis an die jeweilige, als Massebarriere wirkende Isolierungsdiffusionszone (21 bzw. 22) erstreckend einer der beiden Transistoren (4, 6) angeordnet ist.

15. In Bipolartechnik ausgeführte monolithisch integrierte Halbleiterbrückenschaltung nach einem der Ansprüche 1 bis 12, dadurch gekennzeichnet, daß jeweils mindestens die Thyristoren (3, 5) in Bereichen der monolithisch integrierten Schaltung liegen, die von einer Massepotential führenden Rückseitenmetallisierung (20) durch eine Zwischenschicht (90) hinreichend elektrisch isoliert und durch als Massebarrieren wirkende Isolierungsdiffusionszonen (21,22) berandet sind, die über die Oberflächenmetallisierung der monolithisch integrierten Schaltung an Massepotential angeschlossen sind, so daß das Substratpotential mindestens im Bereich zwischen den beiden Massebarrieren (21, 22) auf Masse liegt, während es in den außerhalb liegenden Bereichen floatet, und daß zwischen den Massebarrieren (21, 22) und den Thyristoren (3, 5) die Transistoren (4, 6) angeordnet sind.

# FIG. 1

# FIG. 2

# FIG. 3

# FIG. 4

EP 0 343 428 A1

# FIG. 5

# FIG. 6a

# FIG. 6b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| Y | APEC '87, CONFERENCE PROCEEDINGS 06 März 1987, SAN DIEGO, US Seiten 230 - 237; CHR. MANN ET AL: "CONFIGURABLE HIGH CURRENT, HIGH VOLTAGE POWER INTEGRATED CIRCUITS FOR CONTROL AND DRIVE OF DC MOTORS, STEPPER MOTORS AND OTHER INDUCTIVE LOADS" * Figuren 1, 4, 6, 9 * | 1 | H02P7/00 |
| A |  | 2, 5, 7, 9, 13 | |
| | --- | | |
| Y | EP-A-038214 (TECHNICAL OPERATIONS LTD) * Zusammenfassung; Figur 1 * | 1 | |
| | --- | | |
| Y | DE-A-2365110 (LICENTIA PATENT-VERWALTUNGS-GMBH) * Figur 1 * | 1 | |
| | --- | | |
| A | DE-B-1174423 (ROHDE & SCHWARZ) * Spalte 1, Zeilen 22 - 48; Ansprüche 1-4; Figur 1 * | 1, 5, 7, 9, 11 | |
| | --- | | RECHERCHIERTE SACHGEBIETE (Int. Cl.4 ) |
| A | DE-A-1952576 (TEXAS INSTRUMENTS INC.) * Ansprüche 1-14; Figur 3 * | 1 | H02P H03K H01L |

Der vorliegende Recherchenbericht wurde für alle Patentansprüche erstellt

| Recherchenort | Abschlußdatum der Recherche | Prüfer |
|---|---|---|
| DEN HAAG | 27 JULI 1989 | BEYER F. |